# EUROPEAN PATENT APPLICATION

(11) **EP 3 557 832 A1**
(43) Date of publication of application: **23.10.2019**
(21) Application number: 17881218.6
(22) Date of filing: 13.10.2017
(51) Int. Cl.: H04L 29/06

(54) **RESOURCE MANAGEMENT METHOD, DEVICE AND SYSTEM, AND COMPUTER STORAGE MEDIUM**

(30) Priority: 15.12.2016 CN 201611160310
(71) Applicant: ZTE Corporation, Shenzhen, Guangdong 518057 (CN)
(72) Inventor: ZHU, Xinxin, Shenzhen Guangdong 518057 (CN); ZHANG, Li, Shenzhen Guangdong 518057 (CN)
(74) Representative: Herzog IP Patentanwalts GmbH
(86) International application number: PCT/CN2017/106158
(87) International publication number: WO 2018/107884

(57) **Abstract**

Disclosed are a resource management method, device and system. The method includes: sending a resource authorization request to a PCRF network element; receiving a notification message sent by the PCRF network element for indicating expiration of a resource authorization lifetime; and determining a processing strategy for the resource authorization lifetime according to a current session state and the notification message, the processing strategy for the resource authorization lifetime including: refreshing a parameter of the resource authorization lifetime or releasing resources.

## Description

### Cross-reference to Related Applications

This application is based on, and claims the priority of, Chinese patent application CN 201611160310.5, filed on December 15, 2016, the entirety of which is incorporated herein by reference.

### Field of the Invention

The present disclosure relates to wireless communication technologies, and in particular, to a resource management method, device and system, and a computer storage medium.

### Background of the Invention

In Next Generation Network (NGN), the transmitted data flow may be a low-speed and high-latency non-real-time data flow, or a high-speed and low-latency multimedia data flow, or a combination of these data flows. Hence, different data flows have more stringent requirements for end-to-end Quality of Service (QoS) in NGN.

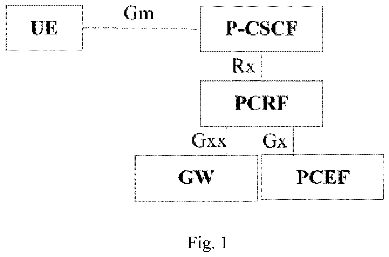

As an important architecture evolved from NGN, the IP Multimedia Core Subsystem (IMS) provides a QoS guarantee for network. At present, a system reference framework for achieving QoS in the IMS is as shown in Fig. 1, and may include: User Equipment (UE), a Proxy Call Session Control Function (P-CSCF) network element, a Policy and Charging Rule Function (PCRF) network element, a Policy and Charging Enforcement Function (PCEF) network element, and a Gateway (GW). Reference points between the network elements in Fig. 1 are as shown in Fig. 1, and are not detailed herein. In addition, a session process may involve functional entities such as an Interconnection Border Control Function (IBCF) network element, an Interrogating Call Session Control Function (I-CSCF) network element, a Serving Call Session Control Function (S-CSCF) network element, and a Media Gateway Control Function (MGCF) network element.

According to the description of the 3^{rd} Generation Partnership Project (3GPP) protocol 29.214, the Policy and Charging Control (PCC) is implemented in the IMS through an Rx reference point. In the IMS, session information is provided to the PCRF network element usually using the Application Function (AF) of the P-CSCF network element. The session information is partially mapped to Attribute-Value-Pairs (AVP) in a Diameter Authentication Authorization Request (AAR) message from a Session Initiation Protocol (SIP) in Session Initiation Protocol (SIP) signaling according to the description of the protocol 3GPP 29.213, and the corresponding information is media flow information controlled by the PCRF.

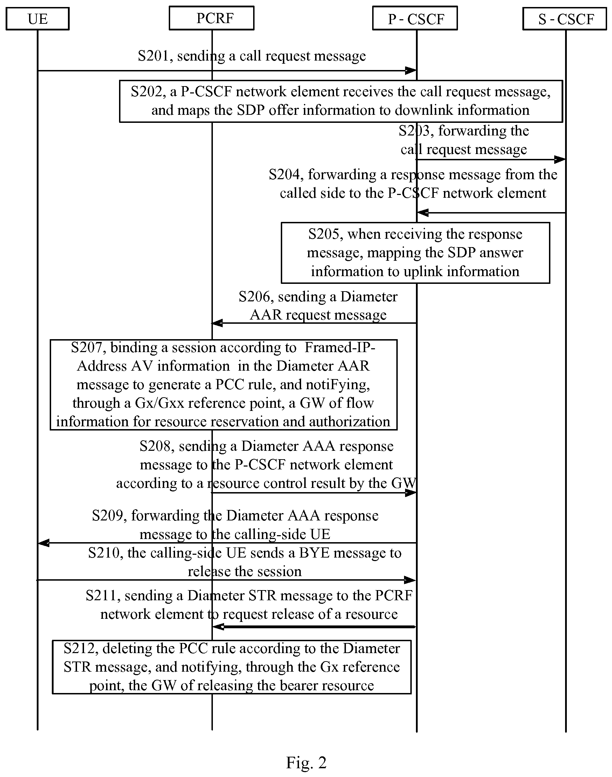

For the current QoS bearer resource control process, referring to Fig. 2, the process of QoS bearer resource control on a calling side may include the following steps.

In step S201, calling-side UE sends a call request message.

The request message contains SDP offer information.

In step S202, a P-CSCF network element receives the call request message, and maps the SDP offer information to downlink information.

In step S203, the P-CSCF network element forwards the call request message to an S-CSCF network element.

The S-CSCF network element sends the call request message to a called side after receiving the call request message.

In step S204, the S-CSCF network element forwards a response message from the called side to the P-CSCF network element.

The response message contains SDP answer information.

In step S205, when receiving the response message, the P-CSCF network element maps the SDP answer information to uplink information.

In step S206, the P-CSCF network element sends a Diameter AAR request message to the PCRF network element.

The Diameter AAR request message is used to request resource authorization from the PCRF network element.

In step S207, the PCRF network element binds a session according to user address Framed-IP-Address Attribute-Value (AV) information issued by a server in the Diameter AAR message to generate a PCC rule, and notifies, through a Gx/Gxx reference point, a GW of flow information for resource reservation and authorization.

In step S208, the PCRF network element sends a Diameter AAA response message to the P-CSCF network element according to a resource control result by the GW.

In step S209, the P-CSCF network element forwards the Diameter AAA response message to the calling-side UE.

In step S210, the calling-side UE sends a BYE message to release the session.

In step S211, after receiving the BYE message sent by the UE, the P-CSCF network element sends a Diameter Session-Termination-Request (STR) message to the PCRF network element to request release of resources.

In step S212, the PCRF network element deletes the PCC rule according to the Diameter STR message, and notifies, through the Gx reference point, the GW of releasing bearer resources.

It should be noted that, in the PCC architecture, the system resources of downstream network elements such as the PCRF network element and the GW network element need to be controlled by an upstream network element AF. That is, the resource release of the PCRF network element system requires an instruction of an AF in the upstream P-CSCF network element, the resource release of the PCEF network element system requires an instruction of the upstream PCRF network element, and the resource release of the GW network element system also requires an instruction of the upstream PCRF network element.

However, in terms of information interaction between network elements, various abnormal conditions may occur, e.g., network packet loss, message processing abnormality, etc., thus causing loss of messages between the network elements of resource release indicated by the upstream network element, and further causing hangs and failure of release of system resources of the downstream network elements. Due to the inconsistency of system resource states of respective network elements caused by the abnormality of message exchanges between the network elements, resource recovery of the downstream network elements may be delayed, thus leading to occupation and waste of resources, and difficulty in the reservation and authorization of QoS bearer resources.

### Summary of the Invention

In order to solve the above technical problems, it is desired that embodiments of the present disclosure provide a resource management method, device and system, and a computer storage medium, which are capable of keeping system resource states of function network elements consistent, reducing waste caused by overtime occupation of system resources of the function network elements, and overcoming defects of a process for processing QoS bearer resources in the present protocol.

The technical solutions of the present disclosure are implemented as follows.

In a first aspect, embodiments of the present disclosure provide a resource management method, the method being applied to a P-CSCF network element, and the method including:
sending a resource authorization request to a PCRF network element, the resource authorization request carrying a parameter of a resource authorization lifetime;
receiving a notification message sent by the PCRF network element for indicating expiration of the resource authorization lifetime; and
determining a processing policy for the resource authorization lifetime according to a current session state and the notification message, the processing policy for the resource authorization lifetime including: refreshing the parameter of the resource authorization lifetime or releasing resources.

In a second aspect, embodiments of the present disclosure provide a resource management method, the method being applied to a PCRF network element, and the method including:
receiving a resource authorization request sent by a P-CSCF network element and carrying a parameter of a resource authorization lifetime;
sending the resource authorization request to a PCEF network element or a GW network element;
receiving a notification message sent by the PCEF network element or the GW network element for indicating expiration of the resource authorization lifetime;
detecting a local resource state according to the notification message;
sending the notification message to the P-CSCF network element when the local resources of the PCRF network element are normal; and
notifying the PCEF network element or the GW network element of releasing the resource when the local resources of the PCRF network element have been released.

In a third aspect, embodiments of the present disclosure provide a P-CSCF network element, the P-CSCF network element including: a first sending module, a first receiving module, and a determination module,
the first sending module is configured to send a resource authorization request to a PCRF network element, the resource authorization request carrying a parameter of a resource authorization lifetime;
the first receiving module is configured to receive a notification message sent by the PCRF network element for indicating expiration of the resource authorization lifetime; and
the determination module is configured to determine a processing policy for the resource authorization lifetime according to a current session state and the notification message, the processing policy for the resource authorization lifetime including: refreshing the parameter of the resource authorization lifetime or releasing resources.

In a fourth aspect, embodiments of the present disclosure provide a PCRF network element, the PCRF network element including: a second receiving module, a second sending module, a second detection module, and a notification module,
the second receiving module is configured to receive a resource authorization request sent by a P-CSCF network element and carrying a parameter of a resource authorization lifetime;
the second sending module is configured to send the resource authorization request to a PCEF network element or a GW network element;
the second receiving module is further configured to receive a notification message sent by the PCEF network element or the GW network element for indicating expiration of the resource authorization lifetime;
the second detection module is configured to detect a local resource state according to the notification message;
the second sending module is further configured to send the notification message to the P-CSCF network element when local resources of the PCRF network element are normal; and
the notification module is configured to notify the PCEF network element or the GW network element of releasing the resource when the local resources of the PCRF network element have been released.

In a fifth aspect, embodiments of the present disclosure provide a resource management system, the system including a P-CSCF network element and a PCRF network element,
the P-CSCF network element is configured to: send a resource authorization request to the PCRF network element, the resource authorization request carrying a parameter of a resource authorization lifetime;
receive a notification message sent by the PCRF network element for indicating expiration of the resource authorization lifetime; and
determine a processing policy for the resource authorization lifetime according to a current session state and the notification message, the processing policy for the resource authorization lifetime including: refreshing the parameter of the resource authorization lifetime or releasing resources; and
the PCRF network element is configured to:
receive the resource authorization request sent by the P-CSCF network element and carrying the parameter of the resource authorization lifetime,
send the resource authorization request to a PCEF network element or a GW network element,
receive a notification message sent by the PCEF network element or the GW network element for indicating expiration of the resource authorization lifetime,
detect a local resource state according to the notification message,
send the notification message to the P-CSCF network element when local resources of the PCRF network element are normal, and
notify the PCEF network element or the GW network element to release resources when the local resources of the PCRF network element have been released.

In a sixth aspect, embodiments of the present disclosure provide a computer storage medium having a computer program stored therein, the computer program being configured to execute the abovementioned resource management method.

The embodiments of the present disclosure provide a resource management method, device and system, and a computer storage medium. By enabling a P-CSCF network element to send a bearer resource authorization request message carrying a parameter of a resource authorization lifetime, a downstream network element can carry out resource authorization according to a local policy or the resource authorization lifetime acquired from an upstream network element, and when the lifetime expires, the expiration is notified to the upstream network element P-CSCF. In this way, the system resource states of the function network elements are kept consistent, waste caused by overtime occupation of system resources of the function network elements is reduced, and defects of a process for processing QoS bearer resources in the present protocol are eliminated.

### Brief Description of the Drawings

Fig. 1 is a schematic diagram of a structure of a system reference framework for implementing QoS according to the prior art;
Fig. 2 is a schematic diagram of a flowchart of QoS bearer resource control on a calling side according to the prior art;
Fig. 3 is a schematic diagram of a flowchart of a resource management method according to an embodiment of the present disclosure;
Fig. 4 is a schematic diagram of a flowchart of a process of detecting the state of a system resource according to an embodiment of the present disclosure;
Fig. 5 is a schematic diagram of a flowchart of another resource management method according to an embodiment of the present disclosure;
Fig. 6 is a schematic diagram of a flowchart of another process of detecting the state of a system resource according to an embodiment of the present disclosure;
Fig. 7 is a schematic diagram of a flowchart of further another process of detecting the state of a system resource according to an embodiment of the present disclosure;
Fig. 8 is a schematic diagram of a flowchart of Specific Embodiment One according to an embodiment of the present disclosure;
Fig. 9 is a schematic diagram of a flowchart of Specific Embodiment Four according to an embodiment of the present disclosure;
Fig. 10 is a schematic diagram of a flowchart of Specific Embodiment Five according to an embodiment of the present disclosure;
Fig. 11 is a schematic diagram of a structure of a P-CSCF network element according to an embodiment of the present disclosure;
Fig. 12 is a schematic diagram of a structure of another P-CSCF network element according to an embodiment of the present disclosure;
Fig. 13 is a schematic diagram of a structure of a PCRF network element according to an embodiment of the present disclosure;
Fig. 14 is a schematic diagram of a hardware structure of the P-CSCF network element according to an embodiment of the present disclosure;
Fig. 15 is a schematic diagram of a hardware structure of the PCRF network element according to an embodiment of the present disclosure; and
Fig. 16 is a schematic diagram of a structure of a resource management system according to an embodiment of the present disclosure.

### Detailed Description of the Embodiments

Technical solutions in embodiments of the present disclosure will be described clearly and completely below with reference to the accompanying drawings in the embodiments of the present disclosure.

The basic idea of the embodiments of the present disclosure is: By enabling a P-CSCF network element to send a bearer resource authorization request message carrying a parameter of a resource authorization lifetime, a downstream network element can carry out resource authorization according to a local policy or the resource authorization lifetime acquired from an upstream network element, and when the lifetime expires, the expiration can be notified to the upstream network element P-CSCF, which achieves the purpose of keeping the system resource states of the function network elements consistent, reducing waste caused by overtime occupation of system resources of the function network elements, and overcoming the defects of protocol description.

Based on the above basic idea, the present disclosure proposes the following embodiments.

### Embodiment One

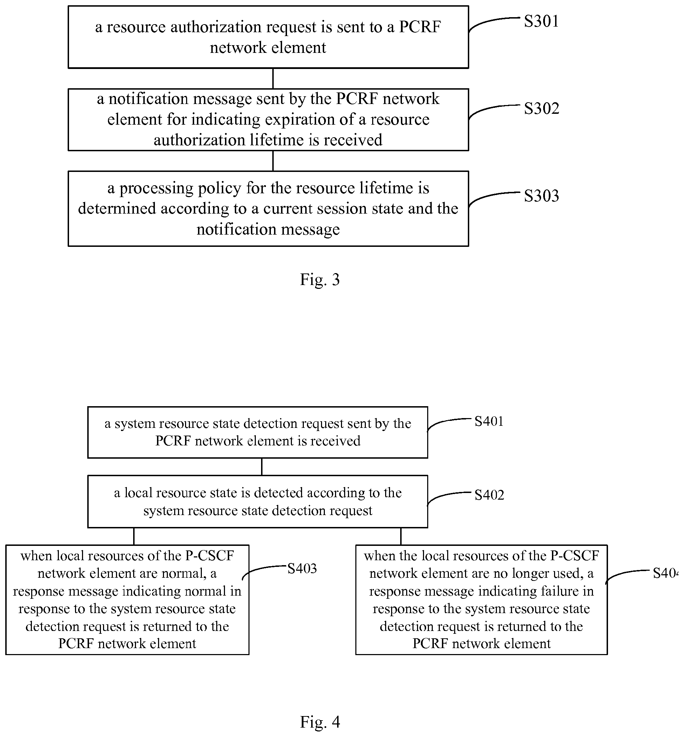

Referring to Fig. 3, a resource management method according to an embodiment of the present disclosure is shown. The method may be applied to a P-CSCF network element in the architecture shown in Fig. 1. The method may include the following steps.

In step S301, a resource authorization request is sent to a PCRF network element.

The resource authorization request carries a parameter of a resource authorization lifetime.

As an example, before step S301, the method may further include the following step.

In this step, a resource authorization request carrying a parameter of a resource authorization lifetime is constructed.

In a specific implementation process, the bearer resource authorization request may be a Diameter AAR message. Thus, when constructing the Diameter AAR message, the P-CSCF network element may package AVP for indicating a resource authorization lifetime into the Diameter AAR message by extending the AVP. In addition, the Diameter AAR message may not carry the AVP for indicating a resource authorization lifetime, so that the PCRF network element may configure a resource authorization lifetime according to a local operator policy.

Specifically, the P-CSCF network element may send the Diameter AAR message constructed in the specific implementation process of step S301 to the PCRF network element through an Rx reference point between the P-CSCF network element and the PCRF network element.

In step S302, a notification message sent by the PCRF network element for indicating expiration of the resource authorization lifetime is received.

Specifically, the PCRF network element receives, through a Gx or Gxx reference point, a notification message sent by a PCEF network element or a GW network element for indicating expiration of the resource authorization lifetime, and sends an indication of expiration of the resource authorization lifetime to the P-CSCF network element through an Rx reference point and by way of a Diameter Re-Auth-Request (RAR) message.

In step S303, a processing policy for the resource authorization lifetime is determined according to a current session state and the notification message, the processing policy for the resource authorization lifetime including: refreshing the parameter of the resource authorization lifetime or releasing resources.

As an example, a value of the parameter of the resource authorization lifetime is determined by a preset policy, or acquired from subscription information corresponding to a user or a service.

As an example, the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

As an example, the step of determining a processing policy for the resource authorization lifetime according to a current session state and the notification message specifically includes the following steps.

If local resources of the P-CSCF network element are normal, a response message indicating normal in response to the notification message is returned to the PCRF network element, and a first request message for refreshing the parameter of the resource authorization lifetime or a second request message for releasing resources is sent to the PCRF network element according to a preset operation policy, the second request message being used to instruct the PCRF network element to release resources, and to instruct, through the PCRF network element, the PCEF network element or the GW network element to release resources.

If the local resources of the P-CSCF network element have been released, a response message indicating failure in response to the notification message is returned to the PCRF network element, the response message indicating failure in response to the notification message being used to instruct the PCRF network element to release resources, and to instruct, through the PCRF network element, the PCEF network element or the GW network element to release resources.

As an example, after step S302, the method may further include the following step.

In this step, the P-CSCF network element sets a timer according to the parameter of the resource authorization lifetime, and initiatively sends, when the timer expires, a request message for refreshing the parameter of the resource authorization lifetime to the PCRF network element according to an operator policy decision. As an example, the request message may be specifically a Diameter AAR message.

In the above solutions, after the resource authorization is completed, the PCRF network element and the PCEF network element or the GW network element may detect the state of the system resource at any time. Referring to Fig. 4, the method further includes the following steps.

In step S401, a system resource state detection request sent by the PCRF network element is received.

In step S402, a local resource state is detected according to the system resource state detection request.

In step S403, when local resources of the P-CSCF network element are normal, a response message indicating normal in response to the system resource state detection request is returned to the PCRF network element.

In step S404, when the local resources of the P-CSCF network element are no longer used, a response message indicating failure in response to the system resource state detection request is returned to the PCRF network element, the response message indicating failure in response to the system resource state detection request being used to instruct the PCRF network element to release resources, and to instruct, through the PCRF network element, the PCEF network element or the GW network element to release resources.

The present embodiment provides a resource management method applied to a P-CSCF network element. By enabling the P-CSCF network element to send a bearer resource authorization request message carrying a parameter of a resource authorization lifetime, a downstream network element can carry out resource authorization according to a local policy or the resource authorization lifetime acquired from an upstream network element, and when the lifetime expired, the expiration is notified to the upstream network element P-CSCF, which achieves the purpose of keeping the system resource states of the function network elements consistent, reducing waste caused by overtime occupation of system resources of the function network elements, and overcoming the defects of protocol description.

### Embodiment Two

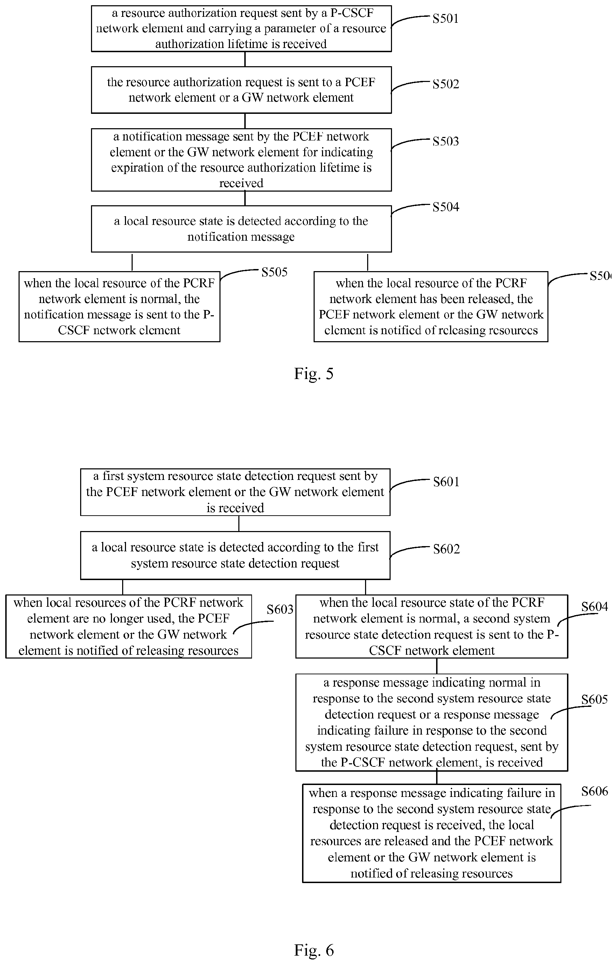

Based on the same technical concept of the foregoing embodiment, referring to Fig. 5, a resource management method according to the present embodiment is shown. The method may be applied to a PCRF network element in the architecture shown in Fig. 1. The method may include the following steps.

In step S501, a resource authorization request sent by a P-CSCF network element and carrying a parameter of a resource authorization lifetime is received,

In step S502, the resource authorization request is sent to a PCEF network element or a GW network element.

In step S503, a notification message sent by the PCEF network element or the GW network element for indicating expiration of the resource authorization lifetime is received.

In step S504, a local resource state is detected according to the notification message.

In step S505, when the local resource of the PCRF network element is normal, the notification message is sent to the P-CSCF network element.

In step S506, when the local resource of the PCRF network element has been released, the PCEF network element or the GW network element is notified of releasing resources.

As an example, the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

As an example, after the notification message is sent to the P-CSCF network element, the method further includes the following step.

In this step, a response message indicating normal in response to the notification message, returned by the P-CSCF network element, is received, and a first request message for refreshing the parameter of the resource authorization lifetime or a second request message for releasing the resource sent by the P-CSCF network element is received, the second request message being used to instruct the PCRF network element to release resources, and to instruct, through the PCRF network element, the PCEF network element or the GW network element to release resources.

Or, in this step, a response message indicating failure in response to the notification message, returned by the P-CSCF network element, is received, the response message indicating failure in response to the notification message being used to instruct the PCRF network element to release resources, and to instruct, through the PCRF network element, the PCEF network element or the GW network element to release resources.

As an example, after the resource authorization is completed, the PCRF network element and the PCEF network element or the GW network element may detect the state of the system resource at any time.

On the one hand, referring to Fig. 6, the method further includes the following steps.

In step S601, a first system resource state detection request sent by the PCEF network element or the GW network element is received.

It should be noted that, for step S601, in the specific implementation process, the PCEF network element or the GW network element may periodically send, after a session authorization resource has been bound, a Diameter Credit Control Request (CCR) message to the PCRF according to the control of the local operator policy for requesting a check on the system resource state.

In step S602, a local resource state is detected according to the first system resource state detection request.

In step S603, when local resources of the PCRF network element are no longer used, the PCEF network element or the GW network element is notified of releasing resources.

Specifically, for step S603, the PCRF network element may notify the PCEF network element or the GW network element of releasing resources by returning a Diameter Credit Control Answer (CCA) message indicating failure to the PCEF network element or the GW network element.

In step S604, when the local resource state of the PCRF network element is normal, a second system resource state detection request is sent to the P-CSCF network element.

Specifically, the second system resource state detection request may be a Diameter RAR message.

In step S605, a response message indicating normal in response to the second system resource state detection request or a response message indicating failure in response to the second system resource state detection request, sent by the P-CSCF network element, is received.

In step S606, when a response message indicating failure in response to the second system resource state detection request is received, the local resources are released and the PCEF network element or the GW network element is notified of releasing resources.

For step S606, like step S603, the PCRF network element may notify the PCEF network element or the GW network element of releasing resources by returning a Diameter Credit Control Answer (CCA) message indicating failure to the PCEF network element or the GW network element.

It should be noted that the response message may specifically be a Diameter RAA response message. When receiving the response message indicating normal in response to the second system resource state detection request, sent by the P-CSCF network element, the PCRF network element keeps the local resource state unchanged, and notifies the PCEF network element or the GW network element of keeping the resource state unchanged by returning a Diameter Credit Control Answer (CCA) message indicating success to the PCEF network element or the GW network element.

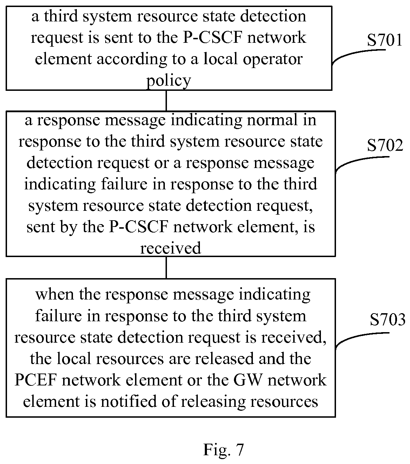

On the other hand, referring to Fig. 7, the method further includes that the following steps.

In step S701, a third system resource state detection request is sent to the P-CSCF network element according to the local operator policy.

In step S702, a response message indicating normal in response to the third system resource state detection request or a response message indicating failure in response to the third system resource state detection request, sent by the P-CSCF network element, is received.

In step S703, when the response message indicating failure in response to the third system resource state detection request is received, the local resources are released and the PCEF network element or the GW network element is notified of releasing resources.

It should be noted that when, the response message indicating normal in response to the third system resource state detection request, sent by the P-CSCF network element, is received, the local resource state is kept unchanged.

The present embodiment provides a resource management method applied to a PCRF network element. By enabling a P-CSCF network element to send a bearer resource authorization request message carrying a parameter of a resource authorization lifetime, the PCRF network element can, by receiving the parameter of the resource authorization lifetime sent by the P-CSCF network element, enable an downstream network element carry out resource authorization according to a local policy or a resource authorization lifetime acquired from an upstream network element, and when the lifetime expires, the upstream network element P-CSCF can be notified, which achieves the purpose of keeping the system resource states of the upstream and downstream network elements consistent, reducing waste caused by overtime occupation of system resources of the network elements, and overcoming e defects of protocol description.

### Embodiment Three

Based on the same technical concept of the foregoing embodiments, the present embodiment describes the foregoing embodiments with respect to several specific implementation modes thereof in practical applications.

### Specific Embodiment One

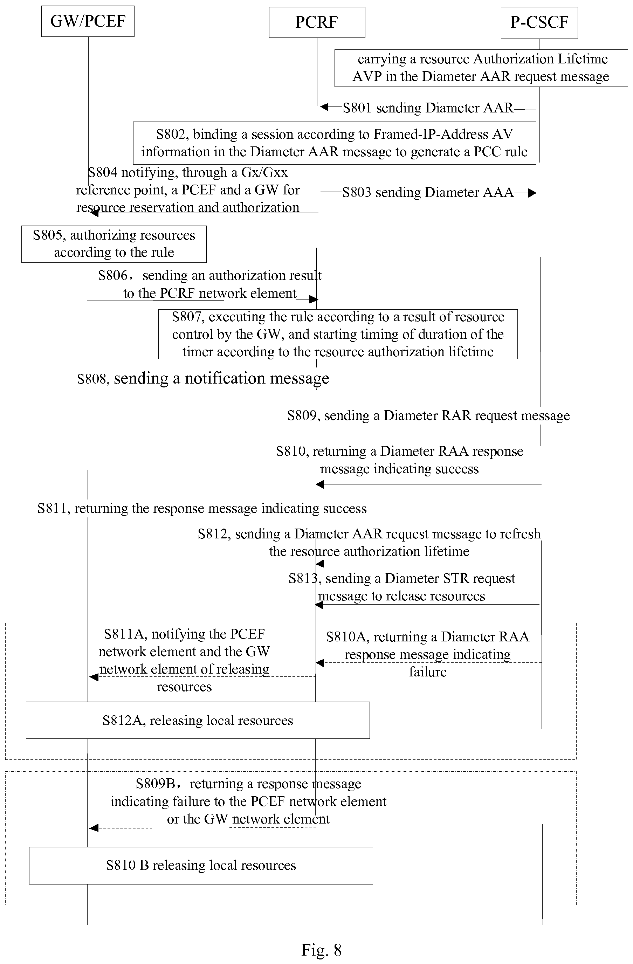

For the parameter of the resource authorization lifetime, which is used to indicate a resource authorization lifetime of an entire Rx session, referring to Fig. 8, the present specific embodiment may include the following steps.

In step S801, a P-CSCF network element sends, to a PCRF network element, a Diameter AAR request message to request resource authorization. At a message level, the Diameter AAR request message carries a resource Authorization Lifetime AVP, and a value of the resource authorization lifetime may be determined by an operation policy, or may be a preset policy configuration value, or may be acquired from subscription information of a user or service.

In step S802, the PCRF network element binds a session according to Framed-IP-Address AV information in the Diameter AAR message to generate a PCC rule.

In step S803, the PCRF network element returns a Diameter AAA response message to the P-CSCF network element.

In step S804, the PCRF network element notifies, through a Gx/Gxx reference point, a PCEF and a GW of flow information, for resource reservation and authorization.

In step S805, the PCEF network element or the GW network element authorizes resources according to the rule.

In step S806, an authorization result is sent to the PCRF network element, and meanwhile timing of duration of a timer starts according to a resource authorization lifetime.

In step S807, the PCRF network element executes the rule according to a result of resource control by the GW, and starts timing of duration of the timer according to the resource authorization lifetime.

In step S808, when the resource authorization lifetime of the PCEF network element or the GW network element expires, the PCEF network element or the GW network element sends a notification message to the PCRF network element.

In step S809, after receiving the notification message, the PCRF network element sends a Diameter RAR request message to the P-CSCF network element if the local resources are normal.

A Specific-Action AVP value in the Diameter RAR request message may be INDICATION_OF_RESERVATION_EXPIRATION for indicating expiration of the resource authorization lifetime.

In step S810, after receiving the Diameter RAR request message, the P-CSCF network element returns a Diameter RAA response message indicating success if the local resources are normal.

In step S811, after receiving the Diameter RAA response message indicating success, the PCRF network element returns the response message indicating success to the PCEF network element or the GW network element.

In step S812, the P-CSCF network element sends, if the session needs to be maintained, a Diameter AAR request message according to a local policy to refresh the resource authorization lifetime. Steps are repeated from S801.

In step S813, the P-CSCF network element sends, if the session needs to be terminated, a Diameter STR request message according to the local policy to release resources.

It should be noted that, after step S809 is completed, if the local resources of the P-CSCF network element have been released, as shown in the dashed box of Fig. 8, the method may further include the following steps after step S809.

In step S810A, after receiving the Diameter RAR request message, the P-CSCF network element sends a Diameter RAA response message indicating failure carrying a failure code DIAMETER_UNKNOWN_SESSION_ID if the P-CSCF determines that the local system resource of the Rx session has been released.

In step S811A, after receiving the Diameter RAA response message indicating failure, the PCRF network element notifies the PCEF network element and the GW network element of releasing resources and meanwhile releases local resources.

In step S812A, after receiving the resource release request message, the PCEF network element or the GW network element releases local resources.

It should be noted that, after step S808, if the local resources of the PCRF network element have been released, as shown in the dashdotted box of Fig. 8, the method may further include the following steps.

In step S809B, after receiving the notification message, when finding that the local resources have been released, the PCRF network element returns a response message indicating failure to the PCEF network element or the GW network element.

In step S810B, the PCEF network element or the GW network element releases local resources when receiving the response message indicating failure.

### Specific Embodiment Two

For the parameter of the resource authorization lifetime, which is used to indicate a resource authorization lifetime corresponding to each medium, in the present embodiment, the following should be noted.

For step S801 in Fig. 8, in the present specific embodiment, it can be specifically as follows.

In step S801, a P-CSCF network element sends, to a PCRF network element, a Diameter AAR request message to request resource authorization. At a media level, the Diameter AAR request message carries a resource Authorization Lifetime AVP, and a value of the resource authorization lifetime may be determined by an operation policy, or may be a policy configuration value, or may be acquired from subscription information of a user or service. Different media types may carry different Authorization Lifetime AVPs.

Subsequent procedures are as described in S802 to S807 of Fig. 8.

In the present specific embodiment, steps S808 to S8013 may be as follows.

In step S808, when the resource authorization lifetime of the PCEF network element or the GW network element expires, the PCEF network element or the GW network element sends a notification message to the PCRF network element, media information carried being indicated in the message, indicating that it is the resource authorization lifetime of the medium that expires.

In step S809, after receiving the notification message, the PCRF network element sends a Diameter RAR request message to the P-CSCF network element if the local resources are normal.

The Diameter RAR request message carries media information, and a Specific-Action A VP value is INDICATION_OF_RESERVATION_EXPIRATION, indicating expiration of the resource authorization lifetime of the medium.

In step S810, after receiving the Diameter RAR request message, the P-CSCF returns a Diameter RAA response message indicating success if the P-CSCF determines that a session exists.

In step S811, after receiving the Diameter RAA response message indicating success, the PCRF network element returns the response message indicating success to the PCEF network element or the GW network element.

In step S812, the P-CSCF network element sends, if the session needs to be maintained, a Diameter AAR request message carrying the corresponding media information in the Diameter RAR request message according to a local policy to refresh the resource authorization lifetime. Steps from step S801 are repeated.

In step S813, the P-CSCF network element sends, if the session needs to be terminated, a Diameter STR request message carrying corresponding media information in the Diameter RAR request message according to the local policy to release resources.

### Specific Embodiment Three

For the parameter of the resource authorization lifetime, which is used to indicate a resource authorization lifetime corresponding to each media flow, it should be noted that steps in the present specific embodiment are consistent with the steps in Specific Embodiment Two, and the only difference lies in that the resource Authorization Lifetime AVP carried in the Diameter AAR request message is in a media subcomponent. Correspondingly, the Diameter RAR request message also needs to carry Flow AVP to indicate a corresponding media flow.

### Specific Embodiment Four

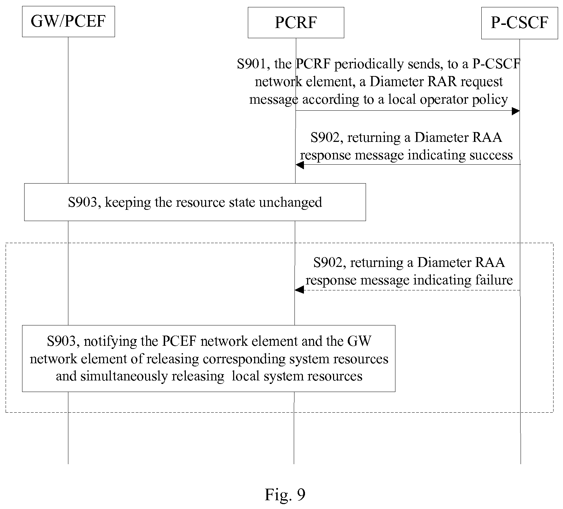

After the binding of the session authorization resource is completed, the PCRF network element may actively initiate state detection on the system resources. Referring to Fig. 9, solutions of the present specific embodiment may include the following steps.

In step S901, the PCRF periodically sends, to a P-CSCF network element, a Diameter RAR request message according to a local operator policy, for requesting a check on the system resource state.

In step S902, after receiving the Diameter RAR request message, the P-CSCF network element returns a Diameter RAA response message indicating success if the current resource state is normal, or returns a Diameter RAA response message indicating failure if a corresponding resource on the current P-CSCF network element is no longer used.

In step S903, the PCRF network element keeps the resource state unchanged if receiving a Diameter RAA response message indicating success, or notifies the PCEF network element and the GW network element of releasing corresponding system resources and simultaneously releases local system resources if receiving a Diameter RAA response message indicating failure.

### Specific Embodiment Five

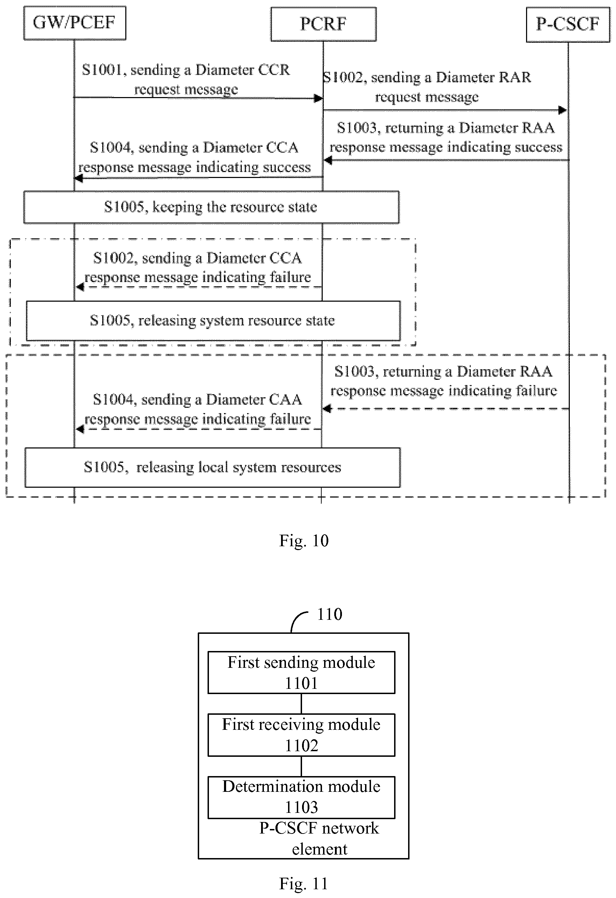

After the binding of the session authorization resource is completed, the PCEF or GW network element may actively initiate state detection on system resources. Referring to Fig. 10, solutions of the present specific embodiment may include the following steps.

In step S1001, the PCEF or GW network element periodically sends, to a PCRF network element, a Diameter CCR request message according to a local operator policy, for requesting a check on the system resource state.

In step S1002, after receiving the Diameter CCR request message, the PCRF network element checks the current local resource state, and sends a Diameter RAR request message to a P-CSCF network element if the local resources of the current PCRF network element are normal, or returns a Diameter CCA response message indicating failure if the corresponding resource on the current PCRF network element is no longer used.

In step S1003, after receiving the Diameter RAR request message, the P-CSCF network element returns a Diameter RAA response message indicating success if the current resource state is normal, or returns a Diameter RAA response message indicating failure if the corresponding resource on the current P-CSCF network element is no longer used.

In step S 1004, if receiving a Diameter RAA response message indicating success, the PCRF network element keeps the resource state unchanged, and sends a Diameter CCA response message indicating success to notify a PCEF or GW network element to keep resources; or if receiving a Diameter RAA response message indicating failure, the PCRF network element sends a Diameter CCA response message indicating failure to notify the PCEF or GW network element of releasing resources and simultaneously releases local system resources.

In step S1005, the PCEF or GW network element keeps the resource state unchanged if receiving the Diameter CCA response message indicating success, or releases local system resources if receiving the Diameter CCA response message indicating failure.

The present embodiment explains specific implementation of technical solutions of the foregoing embodiments by way of the above five specific embodiments. It may be seen that because the parameter of the resource authorization lifetime is carried in the authorization request message, when the lifetime expires, the upstream network element P-CSCF can be notified, which thus achieves the purpose of keeping the system resource states of the upstream and downstream network elements consistent, reducing waste caused by overtime occupation of system resources of the network elements, and overcoming defects of protocol description.

### Embodiment Four

Based on the same technical concept of the foregoing embodiment, referring to Fig. 11, a P-CSCF network element 110 according to the present embodiment is shown. The P-CSCF network element 110 includes: a first sending module 1101, a first receiving module 1102, and a determination module 1103.

The first sending module 1101 is configured to send a resource authorization request to a PCRF network element, the resource authorization request carrying a parameter of a resource authorization lifetime.

The first receiving module 1102 is configured to receive a notification message sent by the PCRF network element for indicating expiration of the resource authorization lifetime.

The determination module 1103 is configured to determine a processing strategy for the resource authorization lifetime according to a current session state and the notification message, the processing strategy for the resource authorization lifetime including: refreshing the parameter of the resource authorization lifetime or releasing resources.

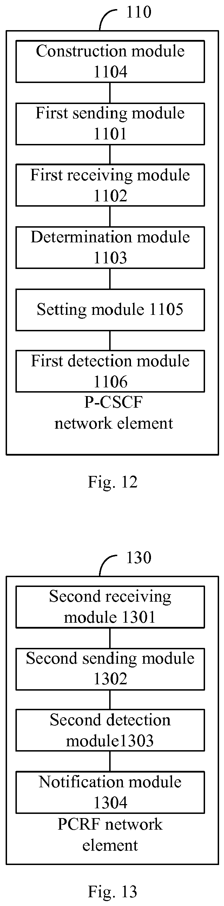

As an example, referring to Fig. 12, the P-CSCF network element 110 may further include: a construction module 1104 configured to construct a resource authorization request carrying a parameter of a resource authorization lifetime.

In the above solution, a value of the parameter of the resource authorization lifetime is determined by a preset policy, or acquired from subscription information corresponding to a user or a service.

In the above solution, the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

In the above solution, the determination module 1103 is further configured to:
return, a response message indicating normal in response to the notification message, to the PCRF network element, and send, according to a preset operation policy, a first request message for refreshing the parameter of the resource authorization lifetime or a second request message for releasing resources to the PCRF network element, if the local resources of the P-CSCF network element 110 are normal, the second request message being used to instruct the PCRF network element to release resources, and to instruct, through PCRF network element, the PCEF network element or the GW network element to release resources; and
return, a response message indicating failure in response to the notification message, to the PCRF network element, if the local resources of the P-CSCF network element 110 have been released, the response message indicating failure in response to the notification message being used to instruct the PCRF network element to release resources, and to instruct, through the PCRF network element, the PCEF network element or the GW network element to release resources.

In the above solution, referring to Fig. 12, the P-CSCF network element 110 further includes a setting module 1105, configured to set a timer according to the parameter of the resource authorization lifetime, and trigger, when the timer expires, the first sending module 1101 according to an operator policy decision to actively send a request message for refreshing the parameter of the resource authorization lifetime to the PCRF network element.

In the above solution, the first receiving module 1102 is further configured to receive a system resource state detection request sent by the PCRF network element.

Referring to Fig. 12, the P-CSCF network element 110 further includes a first detection module 1106, configured to: detect a local resource state according to the system resource state detection request;
return, a response message indicating normal in response to the system resource state detection request, to the PCRF network element, when the local resources of the P-CSCF network element 110 are normal; and
return, a response message indicating failure in response to the system resource state detection request, to the PCRF network element 110, when the local resources of the P-CSCF network element are no longer used, the response message indicating failure in response to the system resource state detection request being used to instruct the PCRF network element to release resources, and to instruct, through the PCRF network element, the PCEF network element or the GW network element to release resources.

### Embodiment Five

Based on the same technical concept of the foregoing embodiment, referring to Fig. 13, a PCRF network element 130 according to the present embodiment is shown. The PCRF network element 130 may include: a second receiving module 1301, a second sending module 1302, a second detection module 1303, and a notification module 1304.

The second receiving module 1301 is configured to receive a resource authorization request sent by a P-CSCF network element and carrying a parameter of a resource authorization lifetime.

The second sending module 1302 is configured to send the resource authorization request to a PCEF network element or a GW network element.

The second receiving module 1301 is further configured to receive a notification message sent by the PCEF network element or the GW network element for indicating expiration of the resource authorization lifetime.

The second detection module 1303 is configured to detect a local resource state according to the notification message.

The second sending module 1302 is further configured to send the notification message to the P-CSCF network element when the local resources of the PCRF network element are normal.

The notification module 1304 is configured to notify the PCEF network element or the GW network element of releasing resources when the local resources of the PCRF network element have been released.

In the above solution, the parameter of the resource authorization lifetime is used to indicate a resource authorization lifetime of an entire Rx session; or,
the parameter of the resource authorization lifetime is used to indicate a resource authorization lifetime corresponding to each medium; or,
the parameter of the resource authorization lifetime is used to indicate a resource authorization lifetime corresponding to each media flow.

In the above solution, the second receiving module 1301 is further configured to:
receive, a response message indicating normal in response to the notification message, returned by the P-CSCF network element, and receive a first request message for refreshing the parameter of the resource authorization lifetime or a second request message for releasing resources, sent by the P-CSCF network element, the second request message being used to instruct the PCRF network element to release resources, and to instruct, through the PCRF network element, the PCEF network element or the GW network element to release resources; or
receive, a response message indicating failure in response to the notification message, returned by the P-CSCF network element, the response message indicating failure in response to the notification message being used to instruct the PCRF network element to release resources, and to instruct, through the PCRF network element, the PCEF network element or the GW network element to release resources.

In the above solution, the second receiving module 1301 is further configured to receive a first system resource state detection request sent by the PCEF network element or the GW network element.

The second detection module 1303 is further configured to detect a local resource state according to the first system resource state detection request.

The notification module 1304 is further configured to notify, when the local resources of the PCRF network element are no longer used, the PCEF network element or the GW network element of releasing resources.

The second sending module 1302 is further configured to send, when the local resource state of the PCRF network element is normal, a second system resource state detection request to the P-CSCF network element.

The second receiving module 1301 is further configured to receive a response message indicating normal in response to the second system resource state detection request or a response message indicating failure in response to the second system resource state detection request sent by the P-CSCF network element.

The notification module 1304 is further configured to release local resources and notify the PCEF network element or the GW network element of releasing resources when receiving the response message indicating failure in response to the second system resource state detection request.

In the above solution, the second sending module 1302 is further configured to send a third system resource state detection request to the P-CSCF network element according to the local operator policy.

The second receiving module 1301 is further configured to receive a response message indicating normal in response to the third system resource state detection request or a response message indicating failure in response to the third system resource state detection request sent by the P-CSCF network element.

The notification module 1304 is further configured to release local resources and notify the PCEF network element or the GW network element of releasing resources when receiving the response message indicating failure in response to the third system resource state detection request.

### Embodiment Six

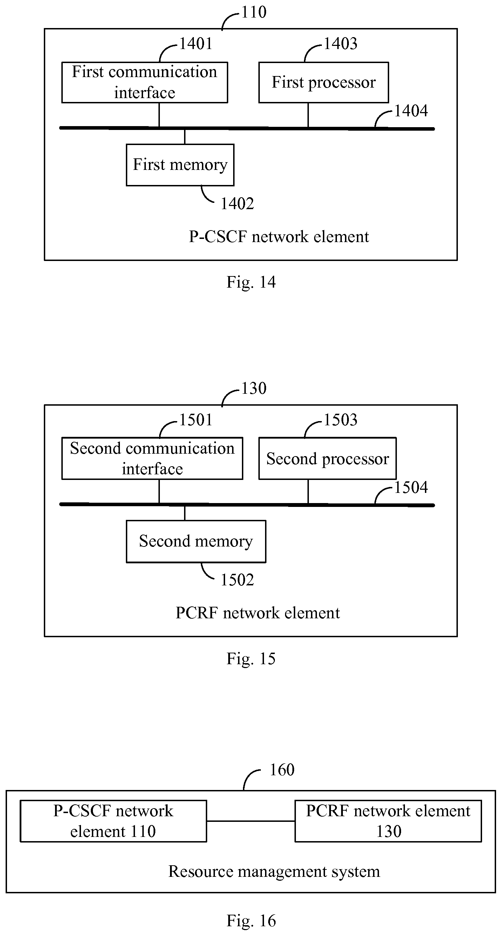

Based on the same technical concept of the foregoing embodiment, referring to Fig. 14, a hardware structure of a P-CSCF network element 110 according to the present embodiment is shown. The hardware structure may include: a first communication interface 1401, a first memory 1402, a first processor 1403, and a first bus 1404.

The first bus 1404 is configured to connect the first communication interface 1401, the first processor 1403 and the first memory 1402, and mutual communications between these devices.

The first communication interface 1401 is configured to transmit data with an external network element.

The first memory 1402 is configured to store instructions and data.

The first processor 1403 executes the instructions for: instructing the first communication interface 1401 to send a resource authorization request to a PCRF network element, the resource authorization request carrying a parameter of a resource authorization lifetime;
instructing the first communication interface 1401 to receive a notification message sent by the PCRF network element for indicating expiration of the resource authorization lifetime; and,
determining a processing strategy for the resource authorization lifetime according to a current session state and the notification message, the processing strategy for the resource authorization lifetime including: refreshing the parameter of the resource authorization lifetime or releasing resources.

In a practical application, the first memory 1602 may be a volatile memory, such as a Random-Access Memory (RAM); or a non-volatile memory, such as a Read-Only Memory (ROM), a flash memory, a Hard Disk Drive (HDD) or a Solid-State Drive (SSD); or a combination of the foregoing memories, and provides instructions and data for the first processor 1403.

The first processor 1403 may be at least one selecting from a group consisting of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It could be appreciated that, for different devices, the electronic device configured to implement functions of the above processor may also be others, which are not specifically limited in the present embodiment.

As an example, the first processor 1403 is further configured to construct a resource authorization request carrying a parameter of a resource authorization lifetime.

In the above solution, a value of the parameter of the resource authorization lifetime is determined by a preset policy, or acquired from subscription information corresponding to a user or a service.

In the above solution, the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

In the above solution, the first processor 1403 is further configured to:
instruct the first communication interface 1401 to return a response message indicating normal in response to the notification message to the PCRF network element, and instruct, according to a preset operation policy, the first communication interface 1401 to send a first request message for refreshing the parameter of the resource authorization lifetime or a second request message for releasing resources to the PCRF network element, if the local resources of the P-CSCF network element 110 are normal, the second request message being used to instruct the PCRF network element to release resources, and to instruct, through the PCRF network element, the PCEF network element or the GW network element to release resources; and
instruct the first communication interface 1401 to return a response message indicating failure in response to the notification message to the PCRF network element, if the local resources of the P-CSCF network element 110 have been released, the response message indicating failure in response to the notification message being used to instruct the PCRF network element to release resources, and to instruct, through the PCRF network element, the PCEF network element or the GW network element to release resources.

In the above solution, the first processor 1403 is further configured to:
instruct the first communication interface 1401 to receive a system resource state detection request sent by the PCRF network element;
detect a local resource state according to the system resource state detection request;
instruct the first communication interface 1401 to return, to the PCRF network element, a response message indicating normal in response to the system resource state detection request, when the local resources of the P-CSCF network element are normal; and
instruct the first communication interface 1401 to return, to the PCRF network element, a response message indicating failure in response to the system resource state detection request, when the local resources of the P-CSCF network element are no longer used, the response message indicating failure in response to the system resource state detection request being used to instruct the PCRF network element to release resources, and to instruct, through the PCRF network element, the PCEF network element or the GW network element to release resources.

### Embodiment Seven

Based on the same technical concept of the foregoing embodiment, referring to Fig. 15, a hardware structure of a PCRF network element 130 according to the present embodiment of disclosure is shown. The hardware structure may include: a second communication interface 1501, a second memory 1502, a second processor 1503, and a second bus 1504.

The second bus 1504 is configured to connect the second communication interface 1501, the second processor 1503 and the second memory 1502, and mutual communications between these devices.

The second communication interface 1501 is configured to transmit data with an external network element.

The second memory 1502 is configured to store instructions and data.

The second processor 1503 executes the instructions for: instructing the second communication interface 1501 to receive a resource authorization request sent by a P-CSCF network element and carrying a parameter of a resource authorization lifetime;
instructing the second communication interface 1501 to send the resource authorization request to a PCEF network element or a GW network element;
instructing the second communication interface 1501 to receive a notification message sent by the PCEF network element or the GW network element for indicating expiration of the resource authorization lifetime;
detecting a local resource state according to the notification message;
instructing the second communication interface 1501 to send the notification message to the P-CSCF network element, when the local resources of the PCRF network element are normal; and
instructing the second communication interface 1501 to notify the PCEF network element or the GW network element of releasing resources, when the local resources of the PCRF network element have been released.

In a practical application, the second memory 1502 may be a volatile memory, such as a Random-Access Memory (RAM); or a non-volatile memory, such as a Read-Only Memory (ROM), a flash memory, a Hard Disk Drive (HDD) or a Solid-State Drive (SSD); or a combination of the foregoing memories, and provides instructions and data for the second processor 1503.

The second processor 1503 may be at least one selected from a group consisting of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It could be appreciated that, for different devices, the electronic device for implementing the above processor functions may also be others, which are not specifically limited in the present embodiment.

As an example, the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

As an example, the second processor 1503 is further configured to:
instruct the second communication interface 1501 to receive a response message indicating normal in response to the notification message returned by the P-CSCF network element, and instruct the second communication interface 1501 to receive a first request message for refreshing the parameter of the resource authorization lifetime or a second request message for releasing resources sent by the P-CSCF network element, the second request message being used to instruct the PCRF network element to release resources, and to instruct, through the PCRF network element, the PCEF network element or the GW network element to release resources; or,
instruct the second communication interface 1501 to receive a response message indicating failure in response to the notification message returned by the P-CSCF network element, the response message indicating failure in response to the notification message being used to instruct the PCRF network element to release resources, and to instruct, through the PCRF network element, the PCEF network element or the GW network element to release resources.

As an example, the second processor 1503 is further configured to:
instruct the second communication interface 1501 to receive a first system resource state detection request sent by the PCEF network element or the GW network element;
detect a local resource state according to the first system resource state detection request;
instruct the second communication interface 1501 to notify the PCEF network element or the GW network element of releasing resources, when the local resources of the PCRF network element are no longer used;
instruct the second communication interface 1501 to send a second system resource state detection request to the P-CSCF network element, when the local resource state of the PCRF network element is normal;
instruct the second communication interface 1501 to receive a response message indicating normal in response to the second system resource state detection request or a response message indicating failure in response to the second system resource state detection request sent by the P-CSCF network element; and,
release local resources and notify the PCEF network element or the GW network element of releasing resources when receiving the response message indicating failure in response to the second system resource state detection request.

As an example, the second processor 1503 is further configured to:
instruct the second communication interface 1501 to send a third system resource state detection request to the P-CSCF network element according to a local operator policy;
instruct the second communication interface 1501 to receive a response message indicating normal in response to the third system resource state detection request or a response message indicating failure in response to the third system resource state detection request sent by the P-CSCF network element; and,
release local resources and notify the PCEF network element or the GW network element of releasing resources when receiving the response message indicating failure in response to the third system resource state detection request.

### Embodiment Eight

Based on the same technical concept of the foregoing embodiment, referring to Fig. 16, a resource management system 160 according to the present embodiment is shown. The system 160 includes a P-CSCF network element 110 and a PCRF network element 130.

The P-CSCF network element 110 is configured to: construct a resource authorization request carrying a parameter of a resource authorization lifetime;
send the resource authorization request to the PCRF network element 130;
receive a notification message sent by the PCRF network element 130 for indicating expiration of the resource authorization lifetime; and,
determine a processing strategy for the resource authorization lifetime according to a current session state and the notification message, the processing strategy for the resource authorization lifetime including: refreshing the parameter of the resource authorization lifetime or releasing resources.

The PCRF network element 130 is configured to: receive the resource authorization request sent by the P-CSCF network element 110 and carrying the parameter of the resource authorization lifetime;
send the resource authorization request to a PCEF network element or a GW network element;
receive a notification message sent by the PCEF network element or the GW network element for indicating expiration of the resource authorization lifetime;
detect a local resource state according to the notification message;
send the notification message to the P-CSCF network element 110 when the local resources of the PCRF network element 130 are normal; and
notify the PCEF network element or the GW network element of releasing resources when the local resources of the PCRF network element 130 have been released.

As an example, the P-CSCF network element 110 is further configured to:
return a response message indicating normal in response to the notification message to the PCRF network element, and send, according to a preset operation policy, a first request message for refreshing the parameter of the resource authorization lifetime or a second request message for releasing resources to the PCRF network element 130, if the local resources of the P-CSCF network element 110 are normal, the second request message being used to instruct the PCRF network element 130 to release resources, and to instruct, through the PCRF network element 130, the PCEF network element or the GW network element to release resources;
return a response message indicating failure in response to the notification message to the PCRF network element 130, if the local resources of the P-CSCF network element 110 have been released, the response message indicating failure in response to the notification message being used to instruct the PCRF network element 130 to release resources, and to instruct, through PCRF network element 130, the PCEF network element or the GW network element to release resources.

As an example, the P-CSCF network element 110 is further configured to:
receive a system resource state detection request sent by the PCRF network element 130;
detect a local resource state according to the system resource state detection request;
return, a response message indicating normal in response to the system resource state detection request, to the PCRF network element 130, when the local resources of the P-CSCF network element 110 are normal; and
return, a response message indicating failure in response to the system resource state detection request, to the PCRF network element 130, when the local resources of the P-CSCF network element 110 are no longer used, the response message indicating failure in response to the system resource state detection request being used to instruct the PCRF network element 130 to release resources, and to instruct, through the PCRF network element 130, the PCEF network element or the GW network element to release resources.

As an example, the PCRF network element 130 is further configured to:
receive a first system resource state detection request sent by the PCEF network element or the GW network element;
detect a local resource state according to the first system resource state detection request;
notify the PCEF network element or the GW network element of releasing resources, when the local resources of the PCRF network element 130 are no longer used,
send a second system resource state detection request to the P-CSCF network element 110, when the local resource state of the PCRF network element 130 is normal;
receive, a response message indicating normal in response to the second system resource state detection request or a response message indicating failure in response to the second system resource state detection request, sent by the P-CSCF network element 110; and
release local resources and notify the PCEF network element or the GW network element of releasing resources when receiving the response message indicating failure in response to the second system resource state detection request.

As an example, the PCRF network element 130 is further configured to:
send a third system resource state detection request to the P-CSCF network element 110 according to the local operator policy;
receive a response message indicating normal in response to the third system resource state detection request or a response message indicating failure in response to the third system resource state detection request sent by the P-CSCF network element 110; and
release local resources and notify the PCEF network element or the GW network element of releasing resources when receiving the response message indicating failure in response to the third system resource state detection request.

When the above device according to the embodiments of the present disclosure is implemented in the form of software function modules and sold or used as an independent product, the device may also be stored in a computer readable storage medium. Based on such an understanding, the technical solution according to the embodiments of the present disclosure may be embodied substantially, or say, the part thereof making contribution to the prior art, may be embodied in the form of a software product. This computer software product is stored in a storage medium, which includes a plurality of instructions enabling a computer device (which may be a personal computer, a server, or a network device, etc.) to execute all of or part of the methods of the embodiments of the present disclosure. The storage medium includes various media capable of storing program codes, such as a U disk, a mobile hard disk, a Read Only Memory (ROM), a magnetic disk or an optical disk. Thus, the embodiments of the present disclosure are not limited to any specific combination of hardware and software.

Correspondingly, an embodiment of the present disclosure further provides a computer storage medium having a computer program stored therein, the computer program being configured to execute the resource management method according to the embodiments of the present disclosure.

The present disclosure is described with reference to the flowcharts and/or block diagrams of the method, the device (system), and the computer program product according to the embodiments of the present disclosure. It should be appreciated that each procedure and/or block in the flowchart and/or block diagrams and a combination of procedures and/or blocks in the flowcharts and/or block diagrams may be implemented by computer program instructions. These computer program instructions may be provided to a general-purpose computer, a dedicated computer, an embedded processor, or a processor of other programmable data processing equipment to generate a machine, so that a device configured to implement functions specified in one or more procedures in the flowcharts and/or one or more blocks in the block diagrams is generated by using instructions executed by the computer or the processor of other programmable data processing equipment.

These computer program instructions may also be stored in a computer readable memory that can guide a computer or another programmable data processing device to work in a specific manner, so that the instructions stored in the computer readable memory generate a product including an instruction device, wherein the instruction device implements functions specified in one or more procedures in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more procedures in the flowcharts and/or one or more blocks in the block diagrams.

The above descriptions are only preferred embodiments of the present disclosure, and are not intended to limit the scope of the present disclosure.

### Industrial Practicability

In the technical solutions of the embodiments of the present disclosure, by enabling a P-CSCF network element to send a bearer resource authorization request message carrying a parameter of a resource authorization lifetime, a downstream network element can carry out resource authorization according to a local policy or a resource authorization lifetime acquired from an upstream network element, and when the lifetime expires, the upstream network element P-CSCF can be notified, by means of which, the system resource states of the function network elements are kept consistent, waste caused by overtime occupation of system resources for the function network elements is reduced, and defects of a process for processing QoS bearer resources in the present protocol are eliminated.

## Claims

1. A resource management method, the method being applied to a proxy call session control function P-CSCF network element, and the method comprising:
sending a resource authorization request to a policy and charging rule function PCRF network element, wherein the resource authorization request carries a parameter of a resource authorization lifetime;
receiving a notification message sent by the PCRF network element for indicating expiration of the resource authorization lifetime; and
determining a processing strategy for the resource authorization lifetime according to a current session state and the notification message, wherein the processing strategy for the resource authorization lifetime comprises: refreshing the parameter of the resource authorization lifetime or releasing resources.

2. The method according to claim 1, wherein, a value of the parameter of the resource authorization lifetime is determined by a preset policy, or acquired from subscription information corresponding to a user or a service.

3. The method according to claim 1, wherein
the parameter of the resource authorization lifetime is used to indicate a resource authorization lifetime of an entire Rx session; or
the parameter of the resource authorization lifetime is used to indicate a resource authorization lifetime corresponding to each medium; or
the parameter of the resource authorization lifetime is used to indicate a resource authorization lifetime corresponding to each media flow.

4. The method according to claim 1, wherein determining a processing strategy for the resource authorization lifetime according to a current session state and the notification message comprises:
returning, a response message indicating normal in response to the notification message, to the PCRF network element, and sending a first request message for refreshing the parameter of the resource authorization lifetime or a second request message for releasing resources to the PCRF network element according to a preset operation policy, if local resources of the P-CSCF network element are normal, wherein the second request message is used to instruct the PCRF network element to release resources, and to instruct, through the PCRF network element, a policy and charging enforcement function PCEF network element or a gateway GW network element to release resources; and
returning, a response message indicating failure in response to the notification message, to the PCRF network element, if local resources of the P-CSCF network element have been released, wherein the response message indicting failure in response to the notification message is used to instruct the PCRF network element to release resources, and to instruct, through the PCRF network element, the PCEF network element or the GW network element to release resources.

5. The method according to claim 1, wherein, after sending a resource authorization request to a PCRF network element, the method further comprises:
setting a timer according to the parameter of the resource authorization lifetime, and actively sending, when the timer expires, a request message for refreshing the parameter of the resource authorization lifetime to the PCRF network element according to an operator policy decision.

6. The method according to any one of claims 1 to 4, further comprising:
receiving a system resource state detection request sent by the PCRF network element;
detecting a local resource state according to the system resource state detection request;
returning, a response message indicting normal in response to the system resource state detection request, to the PCRF network element, when the local resources of the P-CSCF network element are normal; and
returning, a response message indicating failure in response to the system resource state detection request, to the PCRF network element, when the local resources of the P-CSCF network element are no longer used, wherein the response message indicating failure in response to the system resource state detection request is used to instruct the PCRF network element to release resources, and to instruct, through the PCRF network element, the PCEF network element or the GW network element to release resources.

7. A resource management method, the method being applied to a PCRF network element, and the method comprising:
receiving a resource authorization request sent by a P-CSCF network element and carrying a parameter of a resource authorization lifetime;
sending the resource authorization request to a PCEF network element or a GW network element;
receiving a notification message sent by the PCEF network element or the GW network element for indicating expiration of the resource authorization lifetime;
detecting a local resource state according to the notification message;
sending the notification message to the P-CSCF network element, when local resources of the PCRF network element are normal; and
notifying the PCEF network element or the GW network element of releasing resources, when the local resources of the PCRF network element have been released.

8. The method according to claim 7, wherein
the parameter of the resource authorization lifetime is used to indicate a resource authorization lifetime of an entire Rx session; or
the parameter of the resource authorization lifetime is used to indicate a resource authorization lifetime corresponding to each medium; or
the parameter of the resource authorization lifetime is used to indicate a resource authorization lifetime corresponding to each media flow.

9. The method according to claim 7, wherein, after sending the notification message to the P-CSCF network element, the method further comprises:
receiving, a response message indicating normal in response to the notification message, returned by the P-CSCF network element, and receiving a first request message for refreshing the parameter of the resource authorization lifetime or a second request message for releasing resources sent by the P-CSCF network element, wherein the second request message is used to instruct the PCRF network element to release resources, and to instruct, through the PCRF network element, the PCEF network element or the GW network element to release resources; or
receiving, a response message indicating failure in response to the notification message, returned by the P-CSCF network element, wherein the response message indicating failure in response to the notification message is used to instruct the PCRF network element to release resources, and to instruct, through the PCRF network element, the PCEF network element or the GW network element to release resources.

10. The method according to any one of claims 7 to 9, further comprising:
receiving a first system resource state detection request sent by the PCEF network element or the GW network element;
detecting a local resource state according to the first system resource state detection request:
when the local resources of the PCRF network element are no longer used, the PCEF network element or the GW network element is notified of releasing resources;
when the local resource state of the PCRF network element is normal, a second system resource state detection request is sent to the P-CSCF network element;
receiving a response message indicating normal in response to the second system resource state detection request or a response message indicating failure in response to the second system resource state detection request, sent by the P-CSCF network element; and
releasing local resources and notifying the PCEF network element or the GW network element of releasing resources when the response message indicating failure in response to the second system resource state detection request is received.

11. The method according to any one of claims 7 to 9, further comprises:
sending a third system resource state detection request to the P-CSCF network element according to a local operator policy;
receiving a response message indicating normal in response to the third system resource state detection request or a response message indicating failure in response to the third system resource state detection request, sent by the P-CSCF network element; and
releasing local resources and notifying the PCEF network element or the GW network element of releasing resources when the response message indicating failure in response to the third system resource state detection request is received.

12. A P-CSCF network element, comprising: a first sending module, a first receiving module, and a determination module, wherein
the first sending module is configured to send a resource authorization request to a PCRF network element, wherein the resource authorization request carries a parameter of a resource authorization lifetime;
the first receiving module is configured to receive a notification message sent by the PCRF network element for indicating expiration of the resource authorization lifetime; and
the determination module is configured to determine a processing strategy for the resource authorization lifetime according to a current session state and the notification message, wherein the processing strategy for the resource authorization lifetime comprises: refreshing the parameter of the resource authorization lifetime or releasing resources.

13. The P-CSCF network element according to claim 12, wherein
the parameter of the resource authorization lifetime is used to indicate a resource authorization lifetime of an entire Rx session; or,
the parameter of the resource authorization lifetime is used to indicate a resource authorization lifetime corresponding to each medium; or
the parameter of the resource authorization lifetime is used to indicate a resource authorization lifetime corresponding to each media flow.

14. The P-CSCF network element according to claim 12, wherein the determination module is further configured to:
return, a response message indicating normal in response to the notification message, to the PCRF network element, and send a first request message for refreshing the parameter of the resource authorization lifetime or a second request message for releasing resources to the PCRF network element according to a preset operation policy, if local resources of the P-CSCF network element are normal, wherein the second request message is used to instruct the PCRF network element to release resources, and to instruct, through the PCRF network element, the PCEF network element or the GW network element to release resources; and
return, a response message indicating failure in response to the notification message, to the PCRF network element, if the local resources of the P-CSCF network element have been released, wherein the response message indicating failure in response to the notification message is used to instruct the PCRF network element to release resources, and to instruct, through the PCRF network element, the PCEF network element or the GW network element to release resources.

15. The P-CSCF network element according to any one of claims 12 to 14, wherein
the first receiving module is further configured to receive a system resource state detection request sent by the PCRF network element;
the P-CSCF network element further comprises a first detection module, configured to:
detect a local resource state according to the system resource state detection request; and,
return, a response message indicating normal in response to the system resource state detection request, to the PCRF network element, when the local resources of the P-CSCF network element are normal; and
return, a response message indicating failure in response to the system resource state detection request, to the PCRF network element, when the local resources of the P-CSCF network element are no longer used, wherein the response message indicating failure in response to the system resource state detection request is used to instruct the PCRF network element to release resources, and to instruct, through the PCRF network element, the PCEF network element or the GW network element to release resources.

16. A PCRF network element, comprising: a second receiving module, a second sending module, a second detection module, and a notification module, wherein
the second receiving module is configured to receive a resource authorization request sent by a P-CSCF network element and carrying a parameter of a resource authorization lifetime;
the second sending module is configured to send the resource authorization request to a PCEF network element or a GW network element;
the second receiving module is further configured to receive a notification message sent by the PCEF network element or the GW network element for indicating expiration of the resource authorization lifetime;
the second detection module is configured to detect a local resource state according to the notification message;
the second sending module is further configured to send the notification message to the P-CSCF network element when local resources of the PCRF network element are normal; and
the notification module is configured to notify the PCEF network element or the GW network element of releasing resources when the local resources of the PCRF network element have been released.

17. The PCRF network element according to claim 16, wherein the second receiving module is further configured to:
receive, a response message indicating normal in response to the notification message, returned by the P-CSCF network element, and receive a first request message for refreshing the parameter of the resource authorization lifetime or a second request message for releasing resources, sent by the P-CSCF network element, wherein the second request message is used to instruct the PCRF network element to release resources, and to instruct, through the PCRF network element, the PCEF network element or the GW network element to release resources; or
receive, a response message indicating failure in response to the notification message, returned by the P-CSCF network element, wherein the response message indicating failure in response to the notification message is used to instruct the PCRF network element to release resources, and to instruct, through the PCRF network element, the PCEF network element or the GW network element to release resources.

18. The PCRF network element according to claim 16 or 17, wherein
the second receiving module is further configured to receive a first system resource state detection request sent by the PCEF network element or the GW network element;
the second detection module is further configured to detect a local resource state according to the first system resource state detection request:
the notification module is further configured to notify, when the local resources of the PCRF network element are no longer used, the PCEF network element or the GW network element of releasing resources;
the second sending module is further configured to send, when the local resource state of the PCRF network element is normal, a second system resource state detection request to the P-CSCF network element;
the second receiving module is further configured to receive, a response message indicating normal in response to the second system resource state detection request or a response message indicating failure in response to the second system resource state detection request, sent by the P-CSCF network element; and
the notification module is further configured to, when receiving the response message indicating failure in response to the second system resource state detection request, release local resources and notify the PCEF network element or the GW network element of releasing resources.

19. The PCRF network element according to claim 16 or 17, wherein
the second sending module is further configured to send a third system resource state detection request to the P-CSCF network element according to a local operator policy;
the second receiving module is further configured to receive, a response message indicting normal in response to the third system resource state detection request or a response message indicating failure in response to the third system resource state detection request, sent by the P-CSCF network element;
the notification module is further configured to, when receiving the response message indicting failure in response to the third system resource state detection request, release local resources and notify the PCEF network element or the GW network element of releasing resources.

20. A resource management system, comprising a P-CSCF network element and a PCRF network element, wherein
the P-CSCF network element is configured to:
send a resource authorization request to the PCRF network element, wherein the resource authorization request carries a parameter of a resource authorization lifetime,
receive a notification message sent by the PCRF network element for indicating expiration of the resource authorization lifetime, and
determine a processing strategy for the resource authorization lifetime according to a current session state and the notification message, wherein the processing strategy for the resource authorization lifetime comprises: refreshing the parameter of the resource authorization lifetime or releasing resources; and
the PCRF network element is configured to:
receive the resource authorization request sent by the P-CSCF network element and carrying the parameter of the resource authorization lifetime,
send the resource authorization request to a PCEF network element or a GW network element,
receive a notification message sent by the PCEF network element or the GW network element for indicating expiration of the resource authorization lifetime,
detect a local resource state according to the notification message,
send the notification message to the P-CSCF network element when local resources of the PCRF network element are normal, and
notify the PCEF network element or the GW network element of releasing resources when the local resources of the PCRF network element have been released.

21. The system according to claim 20, wherein the P-CSCF network element is further configured to:
return, a response message indicating normal in response to the notification message, to the PCRF network element, and send a first request message for refreshing the parameter of the resource authorization lifetime or a second request message for releasing resources to the PCRF network element according to a preset operation policy, if the local resources of the P-CSCF network element are normal, wherein the second request message is used to instruct the PCRF network element to release resources, and to instruct, through the PCRF network element, the PCEF network element or the GW network element to release resources; and
return, a response message indicating failure in response to the notification message, to the PCRF network element, if the local resources of the P-CSCF network element have been released, wherein the response message indicating failure in response to the notification message is used to instruct the PCRF network element to release resources, and to instruct, through the PCRF network, the PCEF network element or the GW network element to release resources.

22. The system according to claim 20, wherein the P-CSCF network element is further configured to:
receive a system resource state detection request sent by the PCRF network element;
detect a local resource state according to the system resource state detection request;
return, a response message indicating normal in response to the system resource state detection request, to the PCRF network element, when the local resources of the P-CSCF network element are normal; and
return, a response message indicating failure in response to the system resource state detection request, to the PCRF network element, when the local resources of the P-CSCF network element are no longer used, wherein the response message indicating failure in response to the system resource state detection request is used to instruct the PCRF network element to release resources, and to instruct, through the PCRF network element, the PCEF network element or the GW network element of releasing resources.

23. The system according to claim 20, wherein the PCRF network element is further configured to:
receive a first system resource state detection request sent by the PCEF network element or the GW network element;
detect a local resource state according to the first system resource state detection request:
notify the PCEF network element or the GW network element of releasing resources, when the local resources of the PCRF network element are no longer used;
send a second system resource state detection request to the P-CSCF network element, when the local resource state of the PCRF network element is normal;
receive, a response message indicating normal in response to the second system resource state detection request or a response message indicating failure in response to the second system resource state detection request, sent by the P-CSCF network element; and
release local resources and notify the PCEF network element or the GW network element of releasing resources, when receiving the response message indicating failure in response to the second system resource state detection request.

24. The system according to claim 20, wherein the PCRF network element is further configured to:
send a third system resource state detection request to the P-CSCF network element according to a local operator policy;
receive, a response message indicating normal in response to the third system resource state detection request or a response message indicating failure in response to the third system resource state detection request, sent by the P-CSCF network element; and
release local resources and notify the PCEF network element or the GW network element of releasing resources, when receiving the response message indicating failure in response to the third system resource state detection request.

25. A computer storage medium having a computer executable instruction stored therein, the computer executable instruction being configured to execute the resource management method according to any one of claims 1 to 6, or the resource management method according to any one of claims 7 to 11.
